(19) Europäisches Patentamt
European Patent Office
Office européen des brevets

(11) **EP 3 671 583 B1**

(12) **FASCICULE DE BREVET EUROPEEN**

(45) Date de publication et mention
de la délivrance du brevet:
**15.06.2022 Bulletin 2022/24**

(21) Numéro de dépôt: **19218168.3**

(22) Date de dépôt: **19.12.2019**

(51) Classification Internationale des Brevets (IPC):
**G06Q 10/04** *(2012.01)* **G01D 9/00** *(2006.01)*
**G06Q 10/00** *(2012.01)*

(52) Classification Coopérative des Brevets (CPC):
**G06Q 10/04; G01D 9/005; G06Q 10/20**

(54) **PROCÉDÉ ET DISPOSITIF DE MÉMORISATION DE DONNÉES NUMÉRIQUES**

VERFAHREN UND VORRICHTUNG ZUR SPEICHERUNG VON DIGITALEN DATEN

METHOD AND DEVICE FOR STORING DIGITAL DATA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2018 FR 1873839**

(43) Date de publication de la demande:
**24.06.2020 Bulletin 2020/26**

(73) Titulaire: **Thales**
**92400 Courbevoie (FR)**

(72) Inventeurs:
• **MAZEAU, Thierry**
**33701 MERIGNAC (FR)**
• **LARROQUE, Alain**
**33701 MERIGNAC (FR)**
• **GARREC, Patrick**
**33701 MERIGNAC (FR)**

(74) Mandataire: **Lavoix**
**2, place d'Estienne d'Orves**
**75441 Paris Cedex 09 (FR)**

(56) Documents cités:
EP-A2- 3 085 937         US-A1- 2013 096 391
US-A1- 2018 150 036      US-B2- 10 067 038

• **João Gama: "Knowledge Discovery from Data Streams", , 25 mai 2010 (2010-05-25), XP055555150, ISBN: 9781439826119 Extrait de l'Internet: URL:http://www.liaad.up.pt/area/jgama/Data StreamsCRC.pdf [extrait le 2019-02-12]**
• **Daniel Kifer ET AL: "Detecting Change in Data Streams" In: "Proceedings of the Thirtieth international conference on Very large data bases", 1 janvier 2004 (2004-01-01), VLDB Endowment, XP055634649, ISBN: 978-0-12-088469-8 pages 180-191, DOI: 10.1016/B978-012088469-8.50019-X, * abrégé * * chapitre 1 * * chapitre 1.2 * * chapitre 2 ***
• **ALBERT BIFET ET AL: "Learning from Time-Changing Data with Adaptive Windowing", PROCEEDINGS OF THE 2007 SIAM INTERNATIONAL CONFERENCE ON DATA MINING, 26 avril 2007 (2007-04-26), pages 443-448, XP055634610, Philadelphia, PA DOI: 10.1137/1.9781611972771.42 ISBN: 978-1-61197-277-1**

Remarques:
Le dossier contient des informations techniques présentées postérieurement au dépôt de la demande et ne figurant pas dans le présent fascicule.

**Description**

La présente invention concerne un procédé et un dispositif de mémorisation de données numériques représentatives de variables de fonctionnement, évolutives dans le temps, d'un système physique.

L'invention trouve une application particulière dans le domaine de la surveillance et de la maintenance prédictive de systèmes. Ce domaine est connu sous l'acronyme HUMS pour « Health and Usage Monitoring System ». Elle trouve également une application privilégiée dans la maintenance intégrée, qui génère des alertes.

La surveillance et la maintenance intégrée et prédictive met en œuvre un relevé de données de fonctionnement des équipements d'un système, grâce à des capteurs adéquats, les données étant relevées au cours du temps. Ces données sont ensuite traitées par des algorithmes de calcul pour effectuer des tests de bon fonctionnement, et divers diagnostics permettant de prédire par exemple l'usure des équipements du système, et un risque de panne. La mise en œuvre de tels algorithmes permet avantageusement de prévenir d'éventuelles pannes, donc d'augmenter la sécurité de fonctionnement du système et de réduire les coûts de maintenance.

Les systèmes HUMS ont des applications dans de nombreux domaines, par exemple pour la supervision et la maintenance de systèmes de fabrication industrielle, de systèmes de pilotage, ou de systèmes de surveillance d'environnement embarqués, par exemple aéroportés.

Le document US2018/150036 A1 décrit un système de modélisation de données représentatives du fonctionnement d'un système physique, faisant intervenir un modèle court-terme et un modèle long-terme.

De manière classique, il est nécessaire d'observer et d'enregistrer de très grands volumes de données de fonctionnement, avec une récurrence suffisamment fine pour ne pas rater d'éventuels changements d'états significatifs de la variable de fonctionnement observée. Cela induit une nécessité d'espaces de stockage, par exemple des mémoires non volatiles, ayant des capacités très élevées. En pratique, cela implique un encombrement important, qui n'est parfois pas compatible avec le domaine d'application, par exemple dans un système aéroporté.

L'invention a pour objet de remédier à ces inconvénients, en proposant un procédé et un dispositif d'enregistrement permettant de réduire le volume des données enregistrées pour une variable de fonctionnement observée.

A cet effet, l'invention propose, selon un aspect, un procédé d'enregistrement de données numériques représentatives d'une variable de fonctionnement d'un système observée, les données numériques représentatives de ladite variable étant obtenues sous forme d'échantillons, le procédé comprenant un enregistrement de données au cours du temps. Ce procédé comprend des étapes de :

- réception d'échantillons successifs représentatifs de ladite variable observée, et

- pour un échantillon courant, pour au moins deux fenêtres d'observation de tailles différentes, chaque fenêtre d'observation comportant un nombre, égal à la taille de ladite fenêtre, d'échantillons successifs reçus avant l'instant temporel correspondant à l'échantillon courant,

  - calcul d'une valeur moyenne par fenêtre d'observation,
  - calcul d'une différence entre l'échantillon courant et chacune desdites valeurs moyennes,
  - comparaison de chaque différence, en valeur absolue, à une valeur de seuil prédéterminée associée à ladite fenêtre d'observation, et en cas de dépassement de la valeur de seuil pour une valeur de seuil, déclenchement d'un enregistrement de l'échantillon courant dans une mémoire non-volatile.

Avantageusement, l'invention permet de déclencher l'enregistrement en cas de variations constatées en fonction de fenêtres d'observation de durées différentes, ce qui permet d'éviter l'enregistrement de données numériques de valeurs proches, tout en déclenchant l'enregistrement en cas de constatation d'une variation au cours du temps.

Le procédé d'enregistrement de données selon l'invention peut présenter une ou plusieurs des caractéristiques ci-dessous, prises indépendamment ou en combinaison, selon toutes les combinaisons techniquement acceptables.

Le procédé met en œuvre une pluralité de fenêtres d'observation de tailles croissantes.

Les valeurs de seuil sont toutes égales à une même valeur de seuil.

Chaque valeur de seuil est calculée en fonction de la valeur moyenne calculée pour la fenêtre d'observation correspondante et d'un écart-type des échantillons de la fenêtre d'observation correspondante.

Selon un autre aspect, l'invention concerne un dispositif d'enregistrement de données numériques représentatives d'une variable de fonctionnement d'un système observée, les données numériques représentatives de ladite variable étant obtenues sous forme d'échantillons, le dispositif étant configuré pour effectuer un enregistrement de données numériques au cours du temps. Ce dispositif comprend des modules configurés pour :

- recevoir des échantillons successifs représentatifs de ladite variable observée, et

- pour un échantillon courant, pour au moins deux fenêtres d'observation de tailles différentes, chaque fenêtre d'observation comportant un nombre, égal à la taille de ladite fenêtre, d'échantillons successifs reçus avant l'instant temporel correspondant à l'échantillon courant,

- calculer une valeur moyenne par fenêtre d'observation,
- calculer une différence entre l'échantillon courant et chacune desdites valeurs moyennes,
- comparer chaque différence, en valeur absolue, à une valeur de seuil prédéterminée associée à ladite fenêtre d'observation, et en cas de dépassement de la valeur de seuil pour une valeur de seuil, déclencher un enregistrement de l'échantillon reçu dans une mémoire non-volatile.

Le dispositif d'enregistrement de données selon l'invention peut présenter une ou plusieurs des caractéristiques ci-dessous, prises indépendamment ou en combinaison, selon toutes les combinaisons techniquement acceptables.

Les modules sont réalisés par des composants analogiques.

Le dispositif comporte un processeur de calcul, une unité de mémoire électronique non volatile, et une unité de mémoire vive, et modules sont réalisés sous forme de logiciel comportant des instructions logicielles mises en œuvre par le processeur de calcul.

Le dispositif met en œuvre une pluralité n de fenêtres d'observation de tailles croissantes.

Selon un autre aspect, l'invention concerne un procédé de surveillance et de maintenance prédictive d'un système physique, comportant une capture à une fréquence temporelle prédéterminée de données numériques représentatives d'une variable de fonctionnement du système, mettant en œuvre un procédé d'enregistrement de données tel que brièvement décrit ci-dessus dans une unité de mémoire et une mise en œuvre d'un algorithme de surveillance et de maintenance prédictive à partir des données enregistrées.

Selon un autre aspect, l'invention concerne un système de surveillance et de maintenance prédictive d'un système physique, comportant au moins un capteur adapté à capter, à une fréquence temporelle prédéterminée, des données numériques représentatives d'une variable de fonctionnement dudit système physique, mettant en œuvre un dispositif d'enregistrement de données tel que brièvement décrit ci-dessus dans une unité de mémoire et comportant un processeur configuré pour mettre en œuvre un algorithme de surveillance et de maintenance prédictive à partir des données enregistrées.

D'autres caractéristiques et avantages de l'invention ressortiront de la description qui en est donnée ci-dessous, à titre indicatif et nullement limitatif, en référence aux figures annexées, parmi lesquelles :

- [Fig 1] la figure 1 est un synoptique d'un système de surveillance et de maintenance prédictive d'un système physique mettant en œuvre un dispositif d'enregistrement selon un premier mode de réalisation de l'invention;
- [Fig 2] la figure 2 est un schéma bloc des principales étapes d'un procédé d'enregistrement de données selon un mode de réalisation de l'invention ;
- [Fig 3] la figure 3 illustre schématiquement une pluralité de fenêtres d'observation glissantes utilisées dans le procédé d'enregistrement de données ;
- [Fig 4] la figure 4 est un synoptique d'un dispositif d'enregistrement de données selon un deuxième mode de réalisation de l'invention.

L'invention sera décrite ci-après plus particulièrement dans son application dans un système de surveillance et de maintenance prédictive.

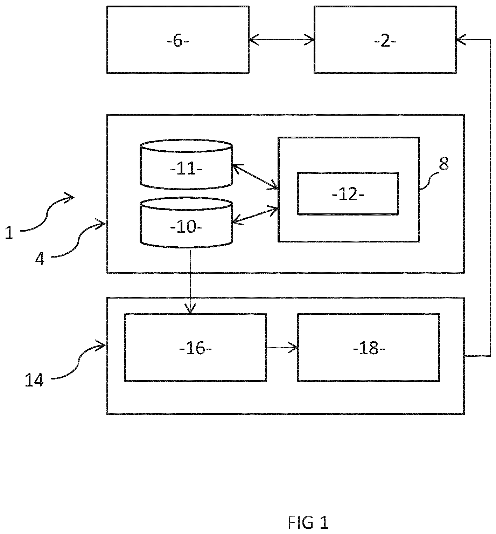

Un mode de réalisation d'un tel système 1 est schématisé dans la figure 1.

Le système de surveillance et de maintenance prédictive 1 d'un système physique 2 comporte un dispositif 4 d'enregistrement de données numériques représentatives de variables de fonctionnement du système 2, obtenues par des capteurs appropriés 6.

Par exemple, le système physique 2 est un radar aéroporté, et la ou les variables de fonctionnement sont par exemple des alimentations, des valeurs de régulations de gain ou de fréquences, des valeurs de puissance radiofréquence, des valeurs de tension ou de courant. Dans ce cas, le capteur 6 est par exemple formé par un amplificateur opérationnel et un codeur analogique/numérique (CAN), un détecteur radiofréquence et un CAN, un convertisseur fréquence/tension et un CAN.

Les données captées sont envoyées au dispositif d'enregistrement 4 sous forme d'échantillons numériques, chaque échantillon numérique ayant une valeur associée, obtenus avec une fréquence d'échantillonnage prédéterminée.

Dans un premier mode de réalisation, le dispositif d'enregistrement 4 est un dispositif électronique de calcul, par exemple un ordinateur ou un composant logique programmable, tel qu'un FPGA (de l'anglais *Field Programmable Gate Array*), un GPU (processeur graphique) ou un GPGPU (de l'anglais General-purpose processing on graphics processing), ou un circuit intégré dédié, tel qu'un ASIC (de l'anglais *Application Specific Integrated Circuit*).

Le dispositif d'enregistrement 4 comporte notamment un processeur de calcul 8, une unité de mémoire électronique 10 non volatile, et une unité de mémoire vive 11. L'unité de mémoire 10 est adaptée à enregistrer les données représentatives de la variable de fonctionnement du système 2 selon le procédé d'enregistrement de l'invention.

Dans ce premier mode de réalisation, le procédé d'enregistrement de données est réalisé sous forme d'un logiciel 12, comportant des instructions de programme, et exécutable par le processeur de calcul 8.

Le système de surveillance et de maintenance prédictive 1 comporte également un dispositif 14 de mise en œuvre d'un algorithme de surveillance et de maintenance prédictive à partir des données enregistrée 16 dans l'unité de mémoire 10. Il comporte également un module 18 de génération d'alertes et/ou d'informations d'amélioration ou de correction, adapté à transmettre les alertes et/ou les informations au système physique 2.

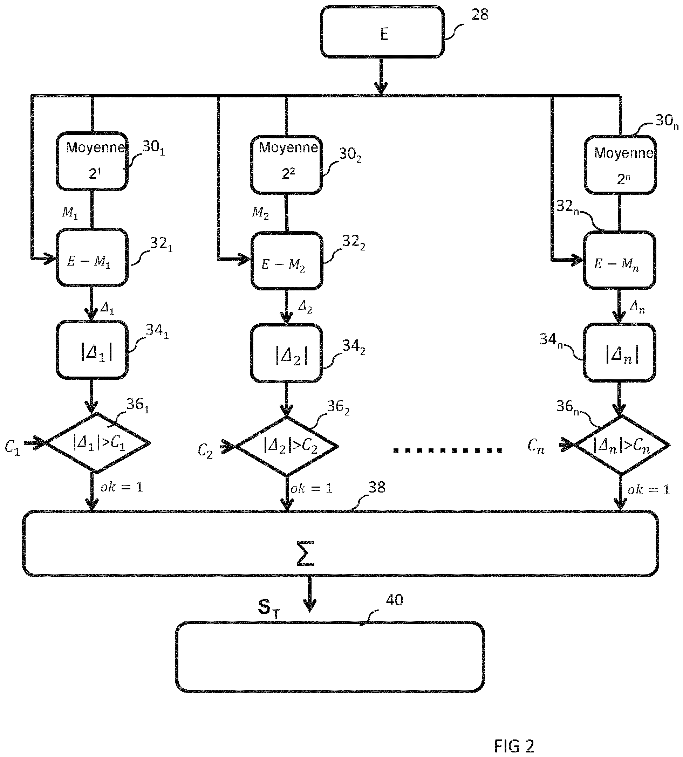

La figure 2 illustre schématiquement un mode de réalisation d'un procédé d'enregistrement de données selon l'invention.

Des données représentatives d'une variable sont reçues à l'étape de réception 28, à intervalles temporels réguliers sous forme d'échantillons $E_j$ à des instants temporels $t_j$.

Pour simplifier les notations, un échantillon courant est noté E dans la figure 2.

Le traitement est effectué sur n branches, mises en œuvre sensiblement en parallèle ou successivement, comme expliqué en détail ci-après.

Suite à la réception de l'échantillon E, des valeurs moyennes sur des fenêtres d'observation $F_i$ de durées différentes sont calculées aux étapes $30_1$ à $30_n$.

Dans l'exemple de réalisation de la figure 2, un nombre n de valeurs moyennes sont calculées sur des fenêtres d'observation $F_i$ de tailles exprimées en nombre d'échantillons successifs reçus avant l'instant temporel correspondant à l'échantillon courant, ce qui correspond à une durée temporelle, les échantillons étant reçus à intervalles temporels réguliers. En effet, lorsque les échantillons sont reçus tous les $T_{ech}$, $T_{ech}$ étant la période d'échantillonnage, une fenêtre d'observation de M échantillons a une durée temporelle de $M \times T_{ech}$.

Une fenêtre d'observation $F_i$ comprend dans cet exemple $2^i$ échantillons. Les fenêtres d'observation sont glissantes, c'est-à-dire qu'elles sont positionnées par rapport à l'instant temporel courant.

Le nombre n de fenêtres d'observation et leurs tailles respectives sont des paramètres du procédé, qui sont fixés en fonction de la variable de fonctionnement observée ou du système physique 2 observé. Par exemple, dans le mode de réalisation de la figure 2, le nombre n est compris entre 2 et un nombre N calculé en fonction de la période d'observation (durée temporelle d'une fenêtre d'observation) la plus longue souhaitée. La durée de fenêtre d'observation Tmax est donnée en fonction de la période d'échantillonnage par la formule $T_{max} = N \times T_{ech}$. Par exemple, la période d'échantillonnage $T_{ech}$ est de 100ms. Pour la surveillance d'une alimentation, sachant que la durée maximale d'une variation est liée aux variations de température et est estimée à 15 min, pour une période d'échantillonnage de 100ms, N=9000.

Lorsque la taille de la fenêtre d'observation est petite, les variations rapides sont détectées. A l'inverse, lorsque la taille de la fenêtre d'observation est grande, la moyenne calculée est insensible aux variations rapides, mais représentative d'une variation lente.

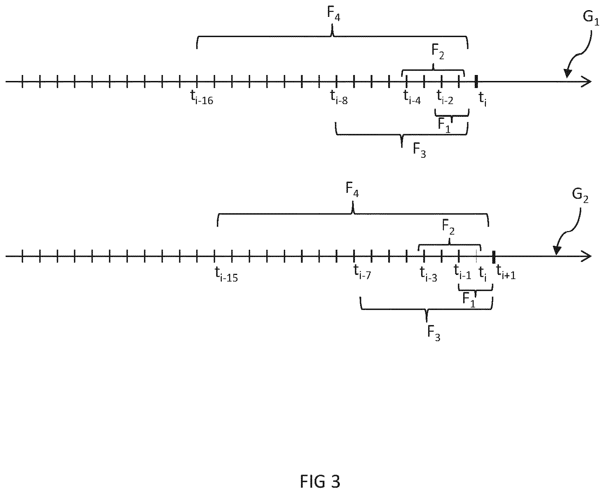

A la figure 3 sont représentées schématiquement des fenêtres d'observation $F_1$, $F_2$, $F_3$, $F_4$ positionnées sur l'axe temporel $G_1$ par rapport à un instant temporel courant $t_i$, et sur l'axe temporel $G_2$ par rapport à un instant temporel courant $t_{i+1}$.

En variante, l'échantillon courant à l'instant temporel courant $t_i$ est pris en compte dans les fenêtres d'observation $F_1...F_n$.

Suite à la mise en œuvre du calcul de moyennes $30_1$ à $30_n$, n valeurs moyennes notées $M_1$ à $M_n$ sont obtenues, chaque moyennes $M_i$ étant calculée sur une fenêtre d'observation de $2^i$ échantillons.

Chaque valeur moyenne $M_i$ calculée est soustraite à la valeur d'échantillons courant E (étapes $32_1$ à $32_n$), ce qui permet d'obtenir une valeur de différence $\Delta_i$.

Ensuite, les valeurs absolues des différences, $|\Delta_i|$ sont calculées lors d'étapes d'obtention de valeurs absolues $34_1$ à $34_n$.

Pour chaque fenêtre d'observation prise en considération, la valeur absolue de la différence calculée à l'étape $34_1$ à $34_n$ est comparée à une valeur de seuil $C_1$ à $C_n$ correspondante à l'étape de comparaison $36_1$ à $36_n$.

Les valeurs de seuil $C_1$ à $C_n$ sont des paramètres du procédé.

Dans un mode de réalisation, les valeurs de seuil $C_i$ sont choisies comme étant un pourcentage de la valeur maximale de variation du signal dont des échantillons E sont reçus, et sont mémorisées préalablement à l'exécution du procédé d'enregistrement. Par exemple, le pourcentage de la valeur maximale de variation dépend de la variable de fonctionnement surveillée.

Dans un autre mode de réalisation, les valeurs de seuil $C_i$ sont calculées en fonction de la moyenne et de l'écart type des échantillons de la fenêtre d'observation correspondante, par exemple selon la formule :

$$C_i = M_i + k \times \sigma_i$$

Où $\sigma_i$ est l'écart type des échantillons de la fenêtre d'observation correspondante, et k un facteur multiplicatif. Par exemple, k=3.

Dans ce mode de réalisation, les valeurs de seuil $C_i$ évoluent au cours du temps, selon le glissement temporel des fenêtres d'observation, de la même manière que les valeurs moyennes $M_i$.

Dans une autre mode de réalisation, les valeurs de seuils $C_i$ sont toutes égales à une valeur de seuil C.

Par exemple, pour la surveillance d'une alimentation les seuils sont définis en fonction du bruit de l'alimentation pour les moyennes courtes et en fonction d'un taux de variation maximum estimé en fonction de la consommation maximum, par exemple : 5%.

Le seuil appliqué sur la moyenne courte est de 3 fois l'amplitude du bruit, le seuil appliqué sur la moyenne la plus longue de 5% de la tension d'alimentation. Les seuils appliqués sur les moyennes intermédiaires sont définis par interpolation linéaire en fonction des durées des moyennes.

Dès que l'une des valeurs absolues de différence $|\Delta_i|$ dépasse la valeur de seuil Ci, une somme binaire $\Sigma$ effectuée à l'étape 38 est mise à 1, et un signal $S_T$ de déclenchement de l'enregistrement est émis. L'étape 38 est alors suivie d'une étape 40 d'enregistrement de l'échantillon courant E dans une mémoire non volatile.

Les échantillons utilisées pour les calculs $30_i$ des moyennes et les valeurs moyennes $M_i$ sont mémorisées seulement temporairement, dans la mémoire vive, pendant l'exécution du procédé.

Si aucune des valeurs absolues de différence $|\Delta_i|$ ne dépasse la valeur de seuil correspondante Ci, l'échantillon courant n'est pas enregistré car il est considéré que son enregistrement n'est pas utile, dans la mesure où sa valeur n'est pas significativement différente des valeurs moyennes calculées sur les fenêtres d'observation de durées différentes.

Après avoir effectué l'étape 38, le procédé retourne à l'étape 28 de réception d'un échantillon suivant, et les étapes $30_i$ à $36_i$ sont itérées, avec des fenêtres d'observation glissantes.

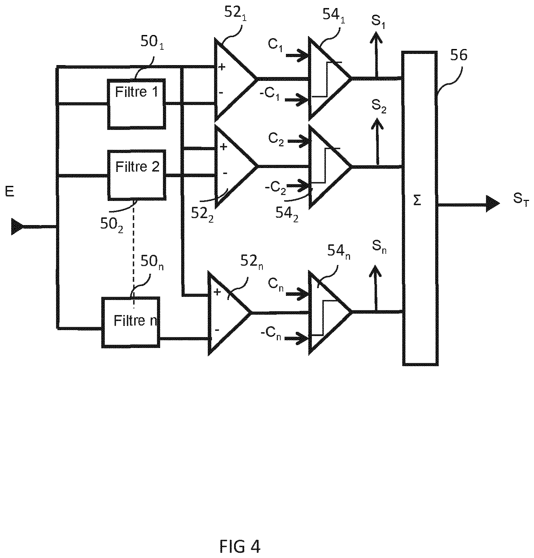

La figure 4 illustre un deuxième mode de réalisation d'un dispositif d'enregistrement 4 selon l'invention.

Dans ce deuxième mode de réalisation, le dispositif d'enregistrement 4 est un dispositif analogique, qui comprend une pluralité de filtres $50_1$ à $50_n$. Chaque filtre $50_i$ effectue une moyenne sur des échantillons obtenus par filtrage passe-haut à fréquence de coupure $1/T_i$ où $T_i$ est la durée de la fenêtre d'observation correspondante.

La différence $\Delta_i$ entre l'échantillon courant et chaque valeur moyenne $M_i$, obtenue en sortie du filtre $50_i$, est obtenue par un comparateur $52_i$. Les valeurs de différence obtenues sont comparées aux seuils correspondants Ci par des comparateurs à fenêtre $54_i$.

En sortie de chaque comparateur à fenêtre $54_i$ on obtient un signal Si qui indique si la différence $\Delta_i$ est comprise entre les valeurs de seuil $-C_i$ et Ci ou pas, le signal Si étant égal à 1 par exemple lorsque la valeur $\Delta_i$ n'est pas comprise entre les valeurs de seuil.

Une somme des signaux Si est effectuée par un module 56 qui génère le signal $S_T$ de commande d'enregistrement de l'échantillon E est obtenu en sortie du module 56. De manière analogue au premier mode de réalisation, le signal $S_T$ commande un enregistrement dès que l'un des signaux Si est égal à 1.

Avantageusement, la prise en considération simultanée de moyennes calculées sur des fenêtres d'observation de durées différentes permet de vérifier à la fois la présence de variation à court terme et à plus long terme.

Dans les modes de réalisation de l'invention décrits ci-dessus, les fenêtres d'observation ont été choisies de tailles croissantes, multipliées par deux entre deux fenêtres successives. En variante, il est possible de choisir d'autres tailles de fenêtres d'observation. Par exemple, les tailles de fenêtres d'observation $\text{Taille}_k$ peuvent progresser selon une autre loi, par exemple une progression du type : $\text{Taille}_k = \text{Taille}_{k-1} + L$, avec L une valeur entière, par exemple L=1.

De même, dans les modes de réalisation décrits il a été considéré que des fenêtres d'observation de tailles croissantes selon une progression régulière sont utilisées. En variante, il est possible de choisir un sous-ensemble de fenêtres d'observations, par exemple utiliser uniquement les fenêtres F1 et F4, auquel cas seulement des variations court-terme sont prises en considération, ou bien utiliser les fenêtres F4 à F12, auquel cas les variations de court-terme ne sont pas prises en considération.

Il est également noté que le procédé de l'invention fonctionne après réception d'un nombre d'échantillons au moins égal à la taille $\text{Taille}_n$ de la fenêtre d'observation $F_n$ la plus grande. Dans un mode de réalisation, le procédé est mis en œuvre avec un temps de latence permettant la réception de suffisamment d'échantillons.

En variante, il est possible d'initialiser les valeurs des $\text{Taille}_n$ premiers échantillons à des valeurs par défaut.

Avantageusement, le procédé de l'invention permet la prise en considération de variations rapides et lentes, et le déclenchement des enregistrements dès que des variations sont constatées. Ainsi, les données numériques enregistrées (les échantillons) sont représentatives des variations de la variable de fonctionnement observée et permettent les calculs de surveillance et de maintenance prédictive. A l'inverse, lorsque les échantillons de la variable de fonctionnement observée ont des valeurs sensiblement proches sur une durée temporelle supérieure ou égale à la durée de la fenêtre d'observation $F_n$, aucun enregistrement n'est effectué, donc la taille de la mémoire de stockage non volatile nécessaire est diminuée.

**Revendications**

1. Procédé d'enregistrement de données numériques représentatives d'une variable de fonctionnement d'un système observée, les données numériques représentatives de ladite variable étant obtenues sous forme d'échantillons, le procédé comprenant un enregistrement de données au cours du temps, le procédé étant **caractérisé en ce qu'**il comprend des étapes de :

   - réception (28) d'échantillons successifs représentatifs de ladite variable observée, et
   - pour un échantillon courant, pour au moins deux fenêtres d'observation (Fi, $F_2$, $F_3$, $F_4$) de tailles différentes, chaque fenêtre d'observation comportant un nombre, égal à la taille de ladite fenêtre, d'échantillons successifs reçus avant l'instant temporel correspondant à l'échantillon courant,

- calcul ($30_1$, $30_2$, $30_n$) d'une valeur moyenne par fenêtre d'observation,
- calcul ($32_1$, $32_2$, $32_n$) d'une différence entre l'échantillon courant et chacune desdites valeurs moyennes,
- comparaison ($36_1$, $36_2$, $36_n$) de chaque différence, en valeur absolue, à une valeur de seuil prédéterminée associée à ladite fenêtre d'observation, et en cas de dépassement de la valeur de seuil pour une valeur de seuil, déclenchement (38, 40) d'un enregistrement de l'échantillon courant dans une mémoire non-volatile (10), un enregistrement de l'échantillon étant déclenché uniquement en cas de dépassement de la valeur seuil pour une valeur seuil.

**2.** Procédé d'enregistrement selon la revendication 1, mettant en œuvre une pluralité (n) de fenêtres d'observation de tailles croissantes.

**3.** Procédé d'enregistrement selon l'une des revendications 1 ou 2, dans lequel les valeurs de seuil sont toutes égales à une même valeur de seuil.

**4.** Procédé selon l'une des revendications 1 ou 2, dans lequel chaque valeur de seuil est calculée en fonction de la valeur moyenne calculée pour la fenêtre d'observation correspondante et d'un écart-type des échantillons de la fenêtre d'observation correspondante.

**5.** Dispositif d'enregistrement de données numériques représentatives d'une variable de fonctionnement d'un système observée, les données numériques représentatives de ladite variable étant obtenues sous forme d'échantillons, le dispositif étant configuré pour effectuer un enregistrement de données numériques au cours du temps, le dispositif étant **caractérisé en ce qu'**il comprend des modules configurés pour :

- recevoir des échantillons successifs représentatifs de ladite variable observée, et
- pour un échantillon courant, pour au moins deux fenêtres d'observation de tailles différentes, chaque fenêtre d'observation comportant un nombre, égal à la taille de ladite fenêtre, d'échantillons successifs reçus avant l'instant temporel correspondant à l'échantillon courant,

- calculer une valeur moyenne par fenêtre d'observation,
- calculer une différence entre l'échantillon courant et chacune desdites valeurs moyennes,
- comparer chaque différence, en valeur absolue, à une valeur de seuil prédéterminée associée à ladite fenêtre d'observation, et en cas de dépassement de la valeur de seuil pour une valeur de seuil, déclencher un enregistrement de l'échantillon reçu dans une mémoire non-volatile, un enregistrement de l'échantillon étant déclenché uniquement en cas de dépassement de la valeur seuil pour une valeur seuil.

**6.** Dispositif d'enregistrement selon la revendication 5, dans lequel les modules sont réalisés par des composants analogiques.

**7.** Dispositif d'enregistrement selon la revendication 5, comportant un processeur de calcul, une unité de mémoire électronique (10) non volatile, et une unité de mémoire vive (11), dans lequel lesdits modules sont réalisés sous forme de logiciel comportant des instructions logicielles mises en œuvre par le processeur de calcul.

**8.** Dispositif d'enregistrement selon l'une des revendications 5 à 7, mettant en œuvre une pluralité (n) de fenêtres d'observation de tailles croissantes.

**9.** Procédé de surveillance et de maintenance prédictive d'un système physique, comportant une capture à une fréquence temporelle prédéterminée de données numérique représentatives d'une variable de fonctionnement du système, mettant en œuvre un procédé d'enregistrement de données conforme aux revendications 1 à 4 et une mise en œuvre d'un algorithme de surveillance et de maintenance prédictive à partir des données enregistrées.

**10.** Système de surveillance et de maintenance prédictive d'un système physique, comportant au moins un capteur adapté à capter, à une fréquence temporelle prédéterminée, des données numériques représentatives d'une variable de fonctionnement dudit système physique, mettant en œuvre un dispositif d'enregistrement de données conforme aux revendications 5 à 8, et comportant un processeur configuré pour mettre en œuvre un algorithme de surveillance et de maintenance prédictive à partir des données enregistrées.

**Patentansprüche**

**1.** Verfahren zum Aufzeichnen von digitalen Daten, die repräsentativ für eine Betriebsvariable eines beobachteten Systems sind, wobei die digitalen Daten, die repräsentativ für die Variable sind, in Form von Stichproben erlangt werden, das Verfahren umfassend eine Aufzeichnung von Daten über die Zeit, wobei das Verfahren **dadurch gekennzeichnet ist, dass** es die folgenden Schritte umfasst:

- Empfangen (28) von aufeinanderfolgenden Stichproben, die repräsentativ für die beobachtete Variable sind, und
- für eine aktuelle Stichprobe für mindestens zwei Beobachtungsfenster ($F_1$, $F_2$, $F_3$, $F_4$) unterschiedlicher Größe, wobei jedes Beobachtungsfenster eine Anzahl, die gleich der Größe des Fensters ist, aufeinanderfolgender Stichproben umfasst, die vor dem Zeitpunkt, der aktuellen Stichprobe entspricht, empfangen wurden,
- Berechnen ($30_1$, $30_2$, $30_n$) eines Durchschnittswerts pro Beobachtungsfenster,
- Berechnen ($32_1$, $32_2$, $32_n$) einer Differenz zwischen der aktuellen Stichprobe und jedem der Mittelwerte,
- Vergleichen ($36_1$, $36_2$, $36_n$) jeder Differenz als Absolutwert mit einem vorbestimmten Schwellenwert, der mit dem Beobachtungsfenster assoziiert ist, und bei Überschreitung des Schwellenwerts für einen Schwellenwert Auslösen (38, 40) einer Aufzeichnung der aktuellen Stichprobe in einem nichtflüchtigen Speicher (10), wobei eine Aufzeichnung der Stichprobe nur bei Überschreitung des Schwellenwerts für einen Schwellenwert ausgelöst wird.

2. Aufzeichnungsverfahren nach Anspruch 1, wobei eine Vielzahl (n) von Beobachtungsfenstern mit zunehmender Größe implementiert wird.

3. Aufzeichnungsverfahren nach einem der Ansprüche 1 oder 2, wobei die Schwellenwerte alle gleich wie ein gleicher Schwellenwert sind.

4. Verfahren nach einem der Ansprüche 1 oder 2, wobei jeder Schwellenwert abhängig von dem für das entsprechende Beobachtungsfenster berechneten Mittelwert und einer Standardabweichung der Stichproben des entsprechenden Beobachtungsfensters berechnet wird.

5. Vorrichtung zur Aufzeichnung von digitalen Daten, die repräsentativ für eine Betriebsvariable eines beobachteten Systems sind, wobei die digitalen Daten, die repräsentativ für die Variable sind, in Form von Stichproben erlangt werden, wobei die Vorrichtung konfiguriert ist, um eine Aufzeichnung der digitalen Daten im Lauf der Zeit durchzuführen, wobei die Vorrichtung **dadurch gekennzeichnet ist, dass** sie Module umfasst, die zu Folgendem konfiguriert sind:

- Empfangen von aufeinanderfolgenden Stichproben, die repräsentativ für die beobachtete Variable sind, und
- für eine aktuelle Stichprobe für mindestens zwei Beobachtungsfenster unterschiedlicher Größe, wobei jedes Beobachtungsfenster eine Anzahl, die gleich der Größe des Fensters ist, aufeinanderfolgender Stichproben umfasst, die vor dem Zeitpunkt, der aktuellen Stichprobe entspricht, empfangen wurden,
- Berechnen eines Durchschnittswerts pro Beobachtungsfenster,
- Berechnen einer Differenz zwischen der aktuellen Stichprobe und jedem der Mittelwerte,
- Vergleichen jeder Differenz als Absolutwert mit einem vorbestimmten Schwellenwert, der mit dem Beobachtungsfenster assoziiert ist, und bei Überschreitung des Schwellenwerts für einen Schwellenwert, Auslösen einer Aufzeichnung der erhaltenen Stichprobe in einem nichtflüchtigen Speicher, wobei eine Aufzeichnung der Stichprobe nur bei Überschreitung des Schwellenwerts für einen Schwellenwert ausgelöst wird.

6. Aufzeichnungsvorrichtung nach Anspruch 5, wobei die Module durch analoge Komponenten realisiert werden.

7. Aufzeichnungsvorrichtung nach Anspruch 5, umfassend einen Berechnungsprozessor, eine nichtflüchtige elektronische Speichereinheit (10) und eine Direktzugriffsspeicher-Einheit (11), wobei die Module in Form von Software realisiert sind, umfassend Software-Anweisungen, die von dem Berechnungsprozessor implementiert werden.

8. Aufzeichnungsvorrichtung nach einem der Ansprüche 5 bis 7, die eine Vielzahl (n) von Beobachtungsfenstern zunehmender Größe implementiert.

9. Verfahren zur Überwachung und prädiktiven Wartung eines physikalischen Systems, umfassend eine Erfassung mit einer vorbestimmten zeitlichen Häufigkeit von digitalen Daten, die repräsentativ für eine Betriebsvariable des Systems sind, wobei ein Verfahren zur Aufzeichnung von Daten gemäß den Ansprüchen 1 bis 4 und eine Implementierung eines Algorithmus zur Überwachung und prädiktiven Wartung anhand der aufgezeichneten Daten implementiert wird.

10. System zur Überwachung und prädiktiven Wartung eines physikalischen Systems, umfassend mindestens einen Sensor, der geeignet ist, um mit einer vorbestimmten zeitlichen Häufigkeit digitale Daten zu erfassen, die repräsentativ für eine Betriebsvariable des physikalischen Systems sind, wobei eine Vorrichtung zur Aufzeichnung von Daten gemäß den Ansprüchen 5 bis 8 implementiert wird, und umfassend einen Prozessor, der konfiguriert ist, um einen Algorithmus zur Überwachung und prädiktiven Wartung anhand der aufgezeichneten Daten zu implementieren.

## Claims

1. A method for recording digital data representative of an operating variable of an observed system, the digital data representative of said variable being obtained in the form of samples, the method comprising a data recording over time, the method being **characterized in that** it comprises the following steps:

   - receiving (28) successive samples representative of said observed variable, and
   - for a current sample, for at least two observation windows ($F_1$, $F_2$, $F_3$, $F_4$) of different sizes, each observation window including a number, equal to the size of said window, of successive samples received before the moment in time corresponding to the current sample,

       - calculating ($30_1$, $30_2$, $30_n$) an average value per observation window,
       - calculating ($32_1$, $32_2$, $32_n$) a difference between the current sample and each of said average values,
       - comparing ($36_1$, $36_2$, $36_n$) each difference, in absolute value, to a predetermined threshold value associated with said observation window, and if the threshold value is exceeded for a threshold value, triggering (38, 40) a recording of the current sample in a non-volatile memory (10), a recording of the sample being trigerred only if the threshold value is exceeded for a threshold value.

2. The recording method according to claim 1, implementing a plurality (n) of observation windows of increasing sizes.

3. The recording method according to one of claims 1 or 2, wherein the threshold values are all equal to a same threshold value.

4. The method according to one of claims 1 or 2, wherein each threshold value is calculated as a function of the average value calculated for the corresponding observation window and a standard deviation of the samples of the corresponding observation window.

5. A device for recording digital data representative of an operating variable of an observed system, the digital data representative of said variable being obtained in the form of samples, the device being configured to perform a digital data recording over time, the device being **characterized in that** it comprises modules configured to:

   - receive successive samples representative of said observed variable, and
   - for a current sample, for at least two observation windows of different sizes, each observation window including a number, equal to the size of said window, of successive samples received before the moment in time corresponding to the current sample,

       - calculate an average value per observation window,
       - calculate a difference between the current sample and each of said average values,
       - compare each difference, in absolute value, to a predetermined threshold value associated with said observation window, and if the threshold value is exceeded for a threshold value, trigger a recording of the received sample in a non-volatile memory, a recording of the sample being trigerred only if the threshold value is exceeded for a threshold value.

6. The recording device according to claim 5, wherein the modules are made by analog components.

7. The recording device according to claim 5, including a computing processor, a non-volatile electronic memory unit (10), and a random-access memory unit (11), wherein said modules are made in software form including software instructions implemented by the computing processor.

8. The recording device according to one of claims 5 to 7, implementing a plurality (n) of observation windows of increasing sizes.

9. A method for monitoring and predictive maintenance of a physical system, including a capture at a predetermined temporal frequency of digital data representative of an operating variable of the system, implementing a method for recording data according to claims 1 to 4 and implementing an algorithm for monitoring and predictive maintenance from recorded data.

10. A system for monitoring and predictive maintenance of a physical system, including at least one sensor suitable for detecting, at a predetermined temporal frequency of digital data representative of an operating variable of said physical system, implementing a device for recording data according to claims 5 to 8, and including a processor configured to implement an algorithm for monitoring and predictive maintenance from recorded data.

FIG 1

FIG 2

FIG 3

FIG 4

**EP 3 671 583 B1**

## RÉFÉRENCES CITÉES DANS LA DESCRIPTION

**Documents brevets cités dans la description**

- US 2018150036 A1